(19) Europäisches Patentamt
European Patent Office
Office européen des brevets

(11) **EP 3 398 391 B1**

(12) **EUROPEAN PATENT SPECIFICATION**

(45) Date of publication and mention
of the grant of the patent:
**15.03.2023 Bulletin 2023/11**

(21) Application number: **16712677.0**

(22) Date of filing: **21.03.2016**

(51) International Patent Classification (IPC):
**H04W 74/04** (2009.01)

(52) Cooperative Patent Classification (CPC):
**H04W 74/04**

(86) International application number:
**PCT/US2016/023362**

(87) International publication number:
**WO 2017/116491 (06.07.2017 Gazette 2017/27)**

(54) **SCHEDULING REQUEST IN EXTREMELY HIGH FREQUENCY SYSTEMS**

ZEITPLANUNGSANFRAGE IN EXTREM HOCHFREQUENTEN SYSTEMEN

DEMANDE DE PROGRAMMATION DANS DES SYSTÈMES À ULTRA-HAUTE FRÉQUENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2015 PCT/CN2015/100107**

(43) Date of publication of application:
**07.11.2018 Bulletin 2018/45**

(73) Proprietor: **Apple Inc.**
**Cupertino, CA 95014 (US)**

(72) Inventors:
• **CHANG, Wenting**
**Beijing 100190 (CN)**
• **ZHU, Yuan**
**Beijing 100012 (CN)**
• **ZHANG, Yushu**
**Beijing 100190 (CN)**
• **NIU, Huaning**
**Milpitas, California 95035 (US)**
• **XIONG, Gang**
**Beaverton, Oregon 97006 (US)**

(74) Representative: **Rooney, John-Paul**
**Withers & Rogers LLP**
**2 London Bridge**
**London SE1 9RA (GB)**

(56) References cited:
**WO-A1-2015/178566     US-A1- 2010 040 005**

• **TEXAS INSTRUMENTS: "Preamble Based Scheduling Request: a Generic Structure", 3GPP DRAFT; R1-072193_SR1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Kobe, Japan; 20070502, 2 May 2007 (2007-05-02), XP050105931, [retrieved on 2007-05-02]**

**Description**

BACKGROUND

In massive multiple-input, multiple-output (MIMO) systems, the evolved NodeB (eNodeB) may use different receiving (Rx) beams to receive the uplink signal. For receiving the scheduling request (SR), however, the transmitting (Tx) signals for different user equipment (UEs) may be mapped to the same resource elements to reduce the overhead. It therefore may be difficult for the eNodeB to decide which Rx beam should be applied for a given resource element. As a result, the physical channel should be designed to address scheduling request transmissions.

The following are relevant documents: WO 2015/178566 A1 (LG LECTRONICS INC [KR]) 26 November 2015 discloses a method and an apparatus for transmitting uplink data in a wireless communication system and US 2010/040005 A1 (KIMHAK-SEONG [KR] ET AL) 18 February 2010 discloses a method and an apparatus of transmitting scheduling request in wireless communication system.

DESCRIPTION OF THE DRAWING FIGURES

Claimed subject matter is particularly pointed out and distinctly claimed in the concluding portion of the specification. However, such subject matter may be understood by reference to the following detailed description when read with the accompanying drawings in which:

FIG. 1 is a diagram of an example of a scheduling request transmission procedure in accordance with one or more aspects;
FIG. 2 is a diagram of an example of a user equipment specific scheduling request transmission in accordance with one or more aspects;
FIG. 3 is a diagram of example options for scheduling request (SR) channel resource mapping in accordance with one or more aspects;
FIG. 4 is a diagram of example scheduling request (SR) channel resource mapping structures in accordance with one or more aspects;
FIG. 5 is a block diagram of an information handling system capable of transmitting or receiving a physical broadcast channel in accordance with one or more aspects;
FIG. 6 is an isometric view of an information handling system of FIG. 5 that optionally may include a touch screen in accordance with one or more aspects; and
FIG. 7 is a diagram of example components of a wireless device in accordance with one or more aspects;

It will be appreciated that for simplicity and/or clarity of illustration, elements illustrated in the figures have not necessarily been drawn to scale. For example, the dimensions of some of the elements may be exaggerated relative to other elements for clarity. Further, if considered appropriate, reference numerals have been repeated among the figures to indicate corresponding and/or analogous elements.

DETAILED DESCRIPTION

The essential features of the invention are outlined by the appended independent claims.

In the following detailed description, numerous specific details are set forth to provide a thorough understanding of claimed subject matter. However, it will be understood by those skilled in the art that claimed subject matter may be practiced without these specific details. In other instances, well-known methods, procedures, components and/or circuits have not been described in detail.

In the following description and/or claims, the terms coupled and/or connected, along with their derivatives, may be used. In particular embodiments, connected may be used to indicate that two or more elements are in direct physical and/or electrical contact with each other. Coupled may mean that two or more elements are in direct physical and/or electrical contact. However, coupled may also mean that two or more elements may not be in direct contact with each other, but yet may still cooperate and/or interact with each other. For example, "coupled" may mean that two or more elements do not contact each other but are indirectly joined together via another element or intermediate elements. Finally, the terms "on," "overlying," and "over" may be used in the following description and claims. "On," "overlying," and "over" may be used to indicate that two or more elements are in direct physical contact with each other. However, "over" may also mean that two or more elements are not in direct contact with each other. For example, "over" may mean that one element is above another element but not contact each other and may have another element or elements in between the two elements. Furthermore, the term "and/or" may mean "and", it may mean "or", it may mean "exclusive-or", it may mean "one", it may mean "some, but not all", it may mean "neither", and/or it may mean "both", although the scope of claimed subject matter is not limited in this respect. In the following description and/or claims, the terms "comprise" and "include," along with their derivatives, may be used and are intended as synonyms for each other.

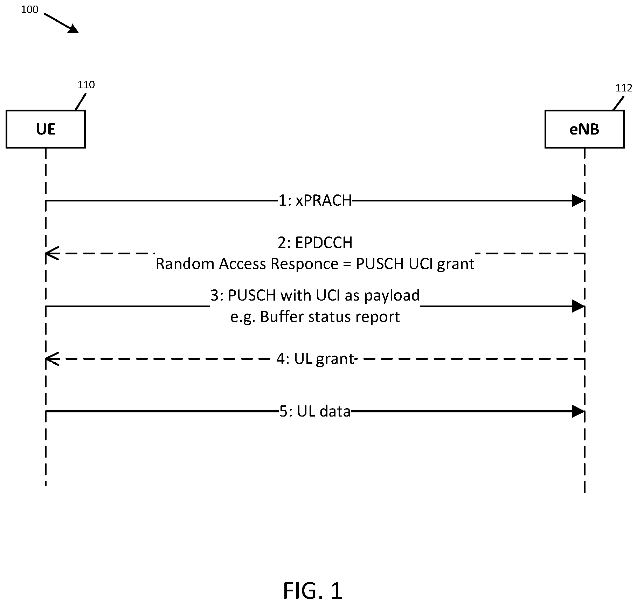

Referring now to FIG. 1, a diagram of an example of a scheduling request transmission procedure in accordance with one or more embodiments will be discussed. In a high frequency band system 100, data transmission between evolved NodeB or eNodeB (eNB) 112 and user equipment (UE) 110 may be performed based on a paired transmit (Tx) and receive (Rx) beam. When UE 110 intends to transmit data through an advanced physical uplink shared channel (xPUSCH), a first operation may be for UE 110 to transmit an advanced physical random access channel (xPRACH) as shown in FIG. 1. In a second operation, UE 110 receives a random access response, reports the Buffer Status Report (BSR) in a third operation, and receives the uplink (UL) grant in a fourth operation before the uplink data transmission in a fifth operation. The collision of the xPRACH among different users may exist, however, which may result in a request failure. On the other hand, the available resource for contention-free xPRACH access may be limited, since a limited number of users may be supported. As a result, UE 110 may request xPUSCH scheduling through another mechanism other than xPRACH. In accordance with one or more embodiments, xPUSCH scheduling request mechanisms may include a physical scheduling request channel and/or control information configuration for the scheduling request (SR) channel.

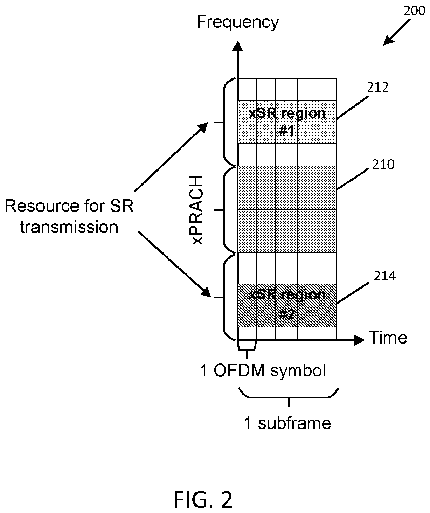

Referring now to FIG. 2, a diagram of an example of a user equipment specific scheduling request transmission in accordance with one or more embodiments will be discussed. At the subframe of an advanced physical random access channel (xPRACH) transmission, receive (Rx) beams will be swept by eNB 112 in a frequency division multiplexing and time division multiplexing manner. Such a subframe 200 enables UE 110 to transmit a scheduling request (SR) without consideration whether the Rx beam at the eNB 112 side is optimal or not. In one or more embodiments, the UE 110 specific scheduling request (SR) may be configured by eNB 112 to enable UE 110 to trigger SR when it intends to transmit uplink data. As shown in FIG. 2, resource blocks in region 210 are occupied by xPRACH. The resource blocks in regions 212 and 214 that are not occupied by xPRACH be utilized to transmit a UE 110 specific SR.

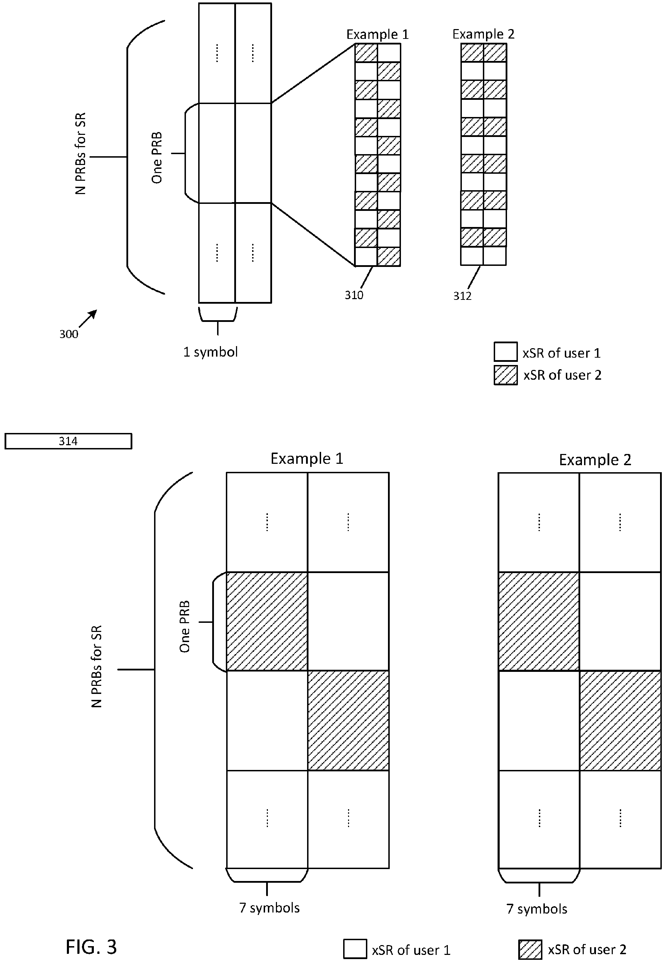

Referring now to FIG. 3, a diagram of example options for scheduling request (SR) channel resource mapping in accordance with one or more embodiments will be discussed. In general, an advanced scheduling request (xSR) may be generated using a sequence based approach or a channel based approach with modulated symbols. In one or embodiments, xSR transmission for different users may be multiplexed in a frequency division multiplexing (FDM) and/or a code division multiplexing (CDM) manner, or a combination of thereof. FIG. 3 shows two examples of xSR transmission where multiple users are multiplexed in an FDM manner. The xSR of different users may be either subcarrier specific or resource block specific multiplexed.

As shown in FIG. 3 at 300, the xSR of user 1 and the xSR of user 2 may be multiplexed within a physical resource block (PRB) in time and/or frequency, or both. In a first example (Example 1) 310, at a given frequency, an xSR of user 1 may occupy a first symbol, and an xSR of user 2 may occupy a second symbol. The order of the xSRs for the users may change with each successive frequency. In a second example (Example 2) 312, at a given frequency, xSRs for user 1 may occupy first and second symbols, and at a successive frequency, xSRs for user 2 may occupy first and second symbols. The xSRs for user 1 and user 2 may alternate for the successive frequencies. As shown in FIG. 3 at 314, the xSR for user 1 may be transmitted in one PRB for seven symbols, and the xSR for user 2 may be transmitted for seven symbols. The order of the PRBs for user 1 and user 2 may alternate with successive PRBs. It should be noted that FIG. 3 shows example arrangements to multiplex the xSRs of two or more users, and the scope of the claimed subject matter is not limited in these respects.

In one embodiment, the Zadoff-Chu (ZC) sequence may be adopted for SR transmission. In particular, the ZC sequence may be generated as follows:

$$r(n) = \exp(j\alpha n) \cdot \bar{r}_{u,v}(n)$$

where

$$\bar{r}_{u,v}(n)$$

is the base sequence for the ZC sequence; $u$ is the sequence-group number and $v$ is the sequence number; $\alpha$ is the cyclic shift. Note that $u$ and $v$ may be determined as a function of , cell ID, virtual cell ID, Beam Reference Signal (BRS) ID or BRS group ID, and/or frame index, subframe index and/or symbol index, and the scope of the claimed subject matter is not limited in these respects.

In one example, $u$ and $v$, may be generated in accordance with an existing Long Term Evolution (LTE) specification, wherein $u$ is defined in section 5.5.1.3 of the Third Generation Partnership Project (3GPP) Technical Standard (TS) 36.211 version 8.7.0 Release 8 and v is defined in section 5.5.1.4 of 3GPP TS version 8.7.0 Release 8. Similarly,

base sequence

$$\bar{r}_{u,v}(n)$$

may be generated as defined in section 5.5.1 of 3GPP TS version 8.7.0 Release 8.

Furthermore, cyclic shift value a applied on each modulated symbol can be defined as a function of physical cell ID and/or virtual cell ID, and/or symbol/slot/frame index. Cyclic shift also may be defined as a function of at least one parameter which is UE 110 specific. Such a parameter may be configured by higher layers via UE 110 specific radio resource control (RRC) signaling, or indicated in the downlink control information (DCI) format for downlink assignment.

In another embodiment, multiple sequence groups may be predefined, where every group contains multiple sequences. Different groups may be assigned to different sites, and the different sequence within a group may be configured to different users within one site. In yet another embodiment, the complex-valued symbol r(m) may be adopted as for SR transmission, such that:

$$r(m) = \frac{1}{\sqrt{2}}\big(1 - 2 \cdot c(2m)\big) + j\frac{1}{\sqrt{2}}\big(1 - 2 \cdot c(2m+1)\big)$$

where the pseudo-random sequence c(l) is defined in 3GPP TS version 8.7.0 Release 8. In one example, the pseudo-random sequence may be initialized as a function of cell ID and subframe index, namely:

$$c_{init} = f(n_{ID}^{cell}, n_{sf}).$$

In another embodiment,

$$N_{bit}^{SR}$$

payload bits, for example Buffer Status Report (BSR) or short BSR may be carried in the scheduling request channel, as well as the reference signal. In such an arrangement, the payload bits may be coded by cyclic redundancy check (CRC) and tail-biting convolutional coder (TBCC), Reed-Müller code, or repeated code, or a combination thereof. The coded bits may be scrambled by a pseudo-random sequence initialized with cell ID, Beam Reference Signal (BRS) group ID or SR channel ID and/or symbol index. Then the scrambled bits may be modulated based on binary phase-shift keying (BPSK) or quadrature phase-shift keying (QPSK), although the scope of the claimed subject matter is not limited in this respect.

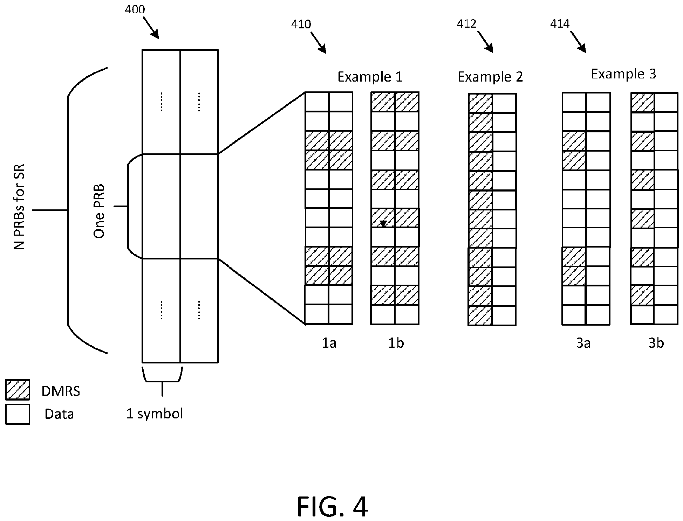

Referring now to FIG. 4, a diagram of example scheduling request (SR) channel resource mapping structures in accordance with one or more embodiments will be discussed. As shown at 400, in one example (Example 1) 410, one symbol contains the data and demodulation reference signal (DMRS) in a frequency-division multiplexing (FDM) arrangement, wherein this symbol is repeated within one subframe. In the second example (Example 2) 412, two of the same type of symbols are repeated within one subframe where one of the symbols is DMRS and the other one of the symbols is data. When the DMRS is successfully detected but eNB 112 failed to decode the payload, eNB 112 still can assign the uplink (UL) grant for buffer status report (BSR) transmission. In a third example (Example 3) 410, groups of two of symbols may be utilized, where DMRS is transmitted on the first symbol and data is transmitted on the second symbol, and then data is transmitted on two symbols that are repeated in a subsequent frequency, for example to reduce the overhead of DMRS. It should be noted that FIG. 4 shows example SR resource mapping structures, and the scope of the claimed subject matter is not limited in these respects.

For control information configuration, in one or more embodiments, the frequency domain index

$$i_{RB,offset}^{SR}$$

may be configured via high layer signaling. The index may take value from 0 to to

$$\left\lceil N_{RB,max}^{SR}/N_{SR}^{RB}\right\rceil-1,$$

where N_(RB,max)^SR denotes total number of resource blocks for SR transmission, and

$$N_{RB,max}^{SR}$$

denotes the number of resource blocks per scheduling request. In one embodiment, the number of orthogonal frequency-division multiplexing (OFDM) symbols

$$N_{symbol}^{SR}$$

per SR may be be configured via high layer signaling. For example, if the Rx beam pattern at eNB 112 is delicately designed so as to span the full spatial space with coarse granularity using $N_{Tx}$ OFDM symbols, for example four symbols,

$$N_{symbol}^{SR}$$

can be equal to N_Tx.

In one embodiment, the OFDM symbol offset

$$N_{symbol,offset}^{SR}$$

may be configured by eNB 112 through high layer signaling to inform UE 110 to transmit the SR starting from the

$$N_{symbol,offset}^{SR}N_{symbol}^{SR}$$

OFDM symbol.

In another embodiment, the resource mapping of SR sequence may be either localized or interleaved. If the localized resource mapping is adopted, the interleave gap and the subcarrier index offset can be configured by eNB 112 through higher layer signaling. In yet another embodiment, the period $T_{SR}$ and the period offset $\Delta_{SR}$ for SR may be configured by higher layer signaling. In such an arrangement, the granularity of SR period may be either one subframe or one period of xPRACH. In yet a further embodiment, the configuration of frequency domain index, number of OFDM symbols, OFDM symbol offset, period, and/or the period offset may be jointly configured by higher layer signaling. Subsequently, eNB 112 may configure the UE 110 specific xSR parameters by single index such as idle mode signaling reduction (ISR) wherein one index may correspond to one set of xSR parameters.

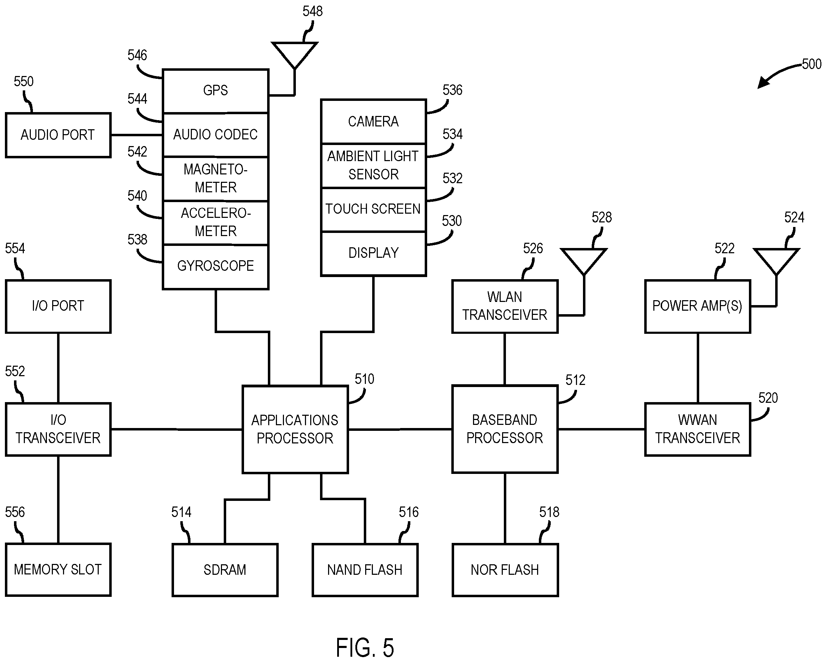

Referring now to FIG. 5, a block diagram of an information handling system capable of transmitting or receiving a physical broadcast channel in accordance with one or more embodiments will be discussed. Information handling system 500 of FIG. 5 may tangibly embody any one or more of the network elements described herein with greater or fewer components depending on the hardware specifications of the particular device. In one embodiment, information handling system 500 may tangibly embody an apparatus of a user equipment (UE) comprising baseband processing circuitry to transmit a scheduling request to an evolved Node B (eNB) if the UE has uplink data for transmission, wherein the scheduling request is transmitted in one or more resource blocks that are not occupied by a physical random access channel, receive an uplink grant from the eNB to transmit data, and transmit the uplink data to the eNB in response to receiving the uplink grant. In another embodiment, information handling system 500 of FIG. 5 may tangibly embody an apparatus of an enhanced NodeB (eNB) comprising baseband processing circuitry to receive a scheduling request transmitted from a user equipment (UE) if the UE has uplink data for transmission, wherein the scheduling request is received in one or more resource blocks that are not occupied by a physical random access channel, transmit an uplink grant to the UE to transmit data, and receive the uplink data from the UE after the UE receives the uplink grant. Although information handling system 500 represents one example of several types of computing platforms, information handling system 500 may include more or fewer elements and/or different arrangements of elements than shown in FIG. 5, and the scope of the claimed subject matter is not limited in these respects.

In one or more embodiments, information handling system 500 may include an application processor 510 and a baseband processor 512. Application processor 510 may be utilized as a general-purpose processor to run applications and the various subsystems for information handling system 500. Application processor 810 may include a single core or alternatively may include multiple processing cores. One or more of the cores may comprise a digital signal processor or digital signal processing (DSP) core. Furthermore, application processor 510 may include a graphics processor or coprocessor disposed on the same chip, or alternatively a graphics processor coupled to application processor 510 may comprise a separate, discrete graphics chip. Application processor 510 may include on board memory such as cache memory, and further may be coupled to external memory devices such as synchronous dynamic random access memory (SDRAM) 514 for storing and/or executing applications during operation, and NAND flash 516 for storing applications and/or data even when information handling system 500 is powered off. In one or more embodiments, instructions to operate or configure the information handling system 500 and/or any of its components or subsystems to operate in a manner as described herein may be stored on an article of manufacture comprising a non-transitory storage medium. In one or more embodiments, the storage medium may comprise any of the memory devices shown in and described herein, although the scope of the claimed subject matter is not limited in this respect. Baseband processor 512 may control the broadband radio functions for information handling system 500. Baseband processor 512 may store code for controlling such broadband radio functions in a NOR flash 818. Baseband processor 812 controls a wireless wide area network (WWAN) transceiver 520 which is used for modulating and/or demodulating broadband network signals, for example for communicating via a 3GPP LTE or LTE-Advanced network or the like.

In general, WWAN transceiver 520 may operate according to any one or more of the following radio communication technologies and/or standards including but not limited to: a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology, for example Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDMA2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 8 (Pre-4th Generation) (3GPP Rel. 8 (Pre-4G)), 3GPP Rel. 9 (3rd Generation Partnership Project Release 9), 3GPP Rel. 10 (3rd Generation Partnership Project Release 10) , 3GPP Rel. 11 (3rd Generation Partnership Project Release 11), 3GPP Rel. 12 (3rd Generation Partnership Project Release 12), 3GPP Rel. 13 (3rd Generation Partnership Project Release 12), 3GPP Rel. 14 (3rd Generation Partnership Project Release 12), 3GPP LTE Extra, LTE Licensed-Assisted Access (LAA), UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code division multiple access 2000 (Third generation) (CDMA2000 (3G)), Evolution-Data Optimized or Evolution-Data Only (EV-DO), Advanced Mobile Phone System (1st Generation) (AMPS (1G)), Total Access Communication System/Extended Total Access Communication System (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Offentlig Landmobil Telefoni, Public Land Mobile Telephony), MTD (Swedish abbreviation for Mobiltelefonisystem D, or Mobile telephony system D), Public Automated Land Mobile (Autotel/PALM), ARP (Finnish for Autoradiopuhelin, "car radio phone"), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handy-phone System (PHS), Wideband Integrated Digital Enhanced Network (WiDEN), iBurst, Unlicensed Mobile Access (UMA), also referred to as also referred to as 3GPP Generic Access Network, or GAN standard), Zigbee, Bluetooth®, Wireless Gigabit Alliance (WiGig) standard, millimeter wave (mmWave) standards in general for wireless systems operating at 10-90 GHz and above such as WiGig, IEEE 802.11ad, IEEE 802.11 ay, and so on, and/or general telemetry transceivers, and in general any type of RF circuit or RFI sensitive circuit. It should be noted that such standards may evolve over time, and/or new standards may be promulgated, and the scope of the claimed subject matter is not limited in this respect.

The WWAN transceiver 520 couples to one or more power amps 542 respectively coupled to one or more antennas 524 for sending and receiving radio-frequency signals via the WWAN broadband network. The baseband processor 512 also may control a wireless local area network (WLAN) transceiver 526 coupled to one or more suitable antennas 528 and which may be capable of communicating via a Wi-Fi, Bluetooth®, and/or an amplitude modulation (AM) or frequency modulation (FM) radio standard including an IEEE 802.11 a/b/g/n standard or the like. It should be noted that these are merely example implementations for application processor 510 and baseband processor 512, and the scope of the claimed subject matter is not limited in these respects. For example, any one or more of SDRAM 514, NAND flash 516 and/or NOR flash 518 may comprise other types of memory technology such as magnetic memory, chalcogenide memory, phase change memory, or ovonic memory, and the scope of the claimed subject matter is not limited in this respect.

In one or more embodiments, application processor 510 may drive a display 830 for displaying various information or data, and may further receive touch input from a user via a touch screen 532 for example via a finger or a stylus. An ambient light sensor 534 may be utilized to detect an amount of ambient light in which information handling system 500 is operating, for example to control a brightness or contrast value for display 530 as a function of the intensity of ambient light detected by ambient light sensor 534. One or more cameras 536 may be utilized to capture images that are processed by application processor 810 and/or at least temporarily stored in NAND flash 516. Furthermore, application processor may couple to a gyroscope 538, accelerometer 540, magnetometer 542, audio coder/decoder (CODEC) 544, and/or global positioning system (GPS) controller 546 coupled to an appropriate GPS antenna 548, for detection of various environmental properties including location, movement, and/or orientation of information handling system 500. Alternatively, controller 546 may comprise a Global Navigation Satellite System (GNSS) controller. Audio CODEC 544 may be coupled to one or more audio ports 550 to provide microphone input and speaker outputs either via internal devices and/or via external devices coupled to information handling system via the audio ports 550, for example via a headphone and microphone jack. In addition, application processor 510 may couple to one or more input/output (I/O) transceivers 552 to couple to one or more I/O ports 554 such as a universal serial bus (USB) port, a high-definition multimedia interface (HDMI) port, a serial port, and so on. Furthermore, one or more of the I/O transceivers 552 may couple to one or more memory slots 556 for optional removable memory such as secure digital (SD) card or a subscriber identity module (SIM) card, although the scope of the claimed subject matter is not limited in these respects.

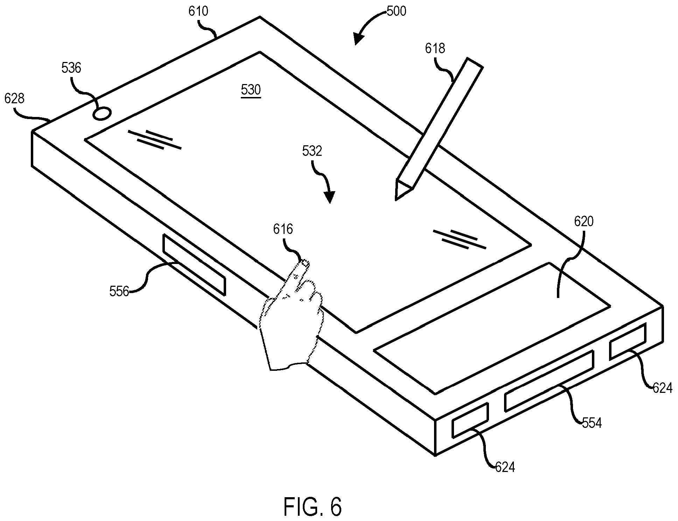

Referring now to FIG. 6, an isometric view of an information handling system of FIG. 5 that optionally may include a touch screen in accordance with one or more embodiments will be discussed. FIG. 6 shows an example implementation of information handling system 500 of FIG. 5 tangibly embodied as a cellular telephone, smartphone, or tablet type device or the like. The information handling system 500 may comprise a housing 610 having a display 530 which may include a touch screen 532 for receiving tactile input control and commands via a finger 616 of a user and/or a via stylus 618 to control one or more application processors 510. The housing 610 may house one or more components of information handling system 500, for example one or more application processors 510, one or more of SDRAM 514, NAND flash 516, NOR flash 518, baseband processor 512, and/or WWAN transceiver 520. The information handling system 500 further may optionally include a physical actuator area 620 which may comprise a keyboard or buttons for controlling information handling system via one or more buttons or switches. The information handling system 500 may also include a memory port or slot 556 for receiving nonvolatile memory such as flash memory, for example in the form of a secure digital (SD) card or a subscriber identity module (SIM) card. Optionally, the information handling system 500 may further include one or more speakers and/or microphones 624 and a connection port 554 for connecting the information handling system 500 to another electronic device, dock, display, battery charger, and so on. In addition, information handling system 500 may include a headphone or speaker jack 628 and one or more cameras 536 on one or more sides of the housing 610. It should be noted that the information handling system 500 of FIG. 6 may include more or fewer elements than shown, in various arrangements, and the scope of the claimed subject matter is not limited in this respect.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware. Embodiments described herein may be implemented into a system using any suitably configured hardware and/or software.

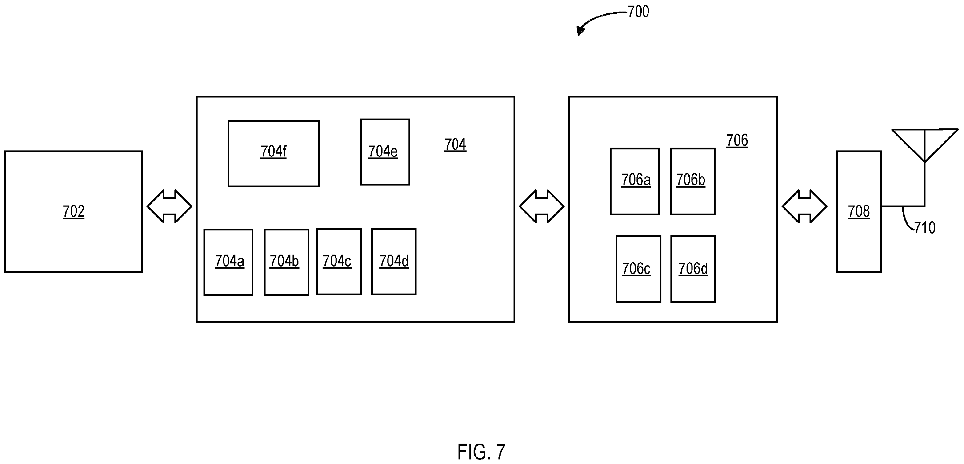

Referring now to FIG. 7, example components of a wireless device such as an evolved NodeB (eNB) 112 device or a User Equipment (UE) 110 device in accordance with one or more embodiments will be discussed. In some embodiments, device 700 may include application circuitry 702, baseband circuitry 704, Radio Frequency (RF) circuitry 706, front-end module (FEM) circuitry 708 and one or more antennas 710, coupled together at least as shown.

Application circuitry 702 may include one or more application processors. For example, application circuitry 702 may include circuitry such as, but not limited to, one or more single-core or multi-core processors. The one or more processors may include any combination of general-purpose processors and dedicated processors, for example graphics processors, application processors, and so on. The processors may be coupled with and/or may include memory and/or storage and may be configured to execute instructions stored in the memory and/or storage to enable various applications and/or operating systems to run on the system.

Baseband circuitry 704 may include circuitry such as, but not limited to, one or more single-core or multi-core processors. Baseband circuitry 704 may include one or more baseband processors and/or control logic to process baseband signals received from a receive signal path of RF circuitry 706 and to generate baseband signals for a transmit signal path of the RF circuitry 706. Baseband processing circuity 704 may interface with the application circuitry 702 for generation and processing of the baseband signals and for controlling operations of the RF circuitry 706. For example, in some embodiments, the baseband circuitry 704 may include a second generation (2G) baseband processor 704a, third generation (3G) baseband processor 704b, fourth generation (4G) baseband processor 704c, and/or one or more other baseband processors 704d for other existing generations, generations in development or to be developed in the future, for example fifth generation (5G), sixth generation (6G), and so on. Baseband circuitry 704, for example one or more of baseband processors 704a through 704d, may handle various radio control functions that enable communication with one or more radio networks via RF circuitry 706. The radio control functions may include, but are not limited to, signal modulation and/or demodulation, encoding and/or decoding, radio frequency shifting, and so on. In some embodiments, modulation and/or demodulation circuitry of baseband circuitry 704 may include Fast-Fourier Transform (FFT), precoding, and/or constellation mapping and/or demapping functionality. In some embodiments, encoding and/or decoding circuitry of baseband circuitry 704 may include convolution, tail-biting convolution, turbo, Viterbi, and/or Low Density Parity Check (LDPC) encoder and/or decoder functionality. Embodiments of modulation and/or demodulation and encoder and/or decoder functionality are not limited to these examples and may include other suitable functionality in other embodiments.

In some embodiments, baseband circuitry 704 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. Processor 704e of the baseband circuitry 1004 may be configured to run elements of the protocol stack for signaling of the PHY, MAC, RLC, PDCP and/or RRC layers. In some embodiments, the baseband circuitry may include one or more audio digital signal processors (DSP) 1004f. The one or more audio DSPs 704f may include elements for compression and/or decompression and/or echo cancellation and may include other suitable processing elements in other embodiments. Components of the baseband circuitry may be suitably combined in a single chip, a single chipset, or disposed on a same circuit board in some embodiments. In some embodiments, some or all of the constituent components of baseband circuitry 704 and application circuitry 702 may be implemented together such as, for example, on a system on a chip (SOC).

In some embodiments, baseband circuitry 704 may provide for communication compatible with one or more radio technologies. For example, in some embodiments, baseband circuitry 704 may support communication with an evolved universal terrestrial radio access network (EUTRAN) and/or other wireless metropolitan area networks (WMAN), a wireless local area network (WLAN), a wireless personal area network (WPAN). Embodiments in which baseband circuitry 704 is configured to support radio communications of more than one wireless protocol may be referred to as multi-mode baseband circuitry.

RF circuitry 706 may enable communication with wireless networks using modulated electromagnetic radiation through a non-solid medium. In various embodiments, RF circuitry 706 may include switches, filters, amplifiers, and so on, to facilitate the communication with the wireless network. RF circuitry 706 may include a receive signal path which may include circuitry to down-convert RF signals received from FEM circuitry 708 and provide baseband signals to baseband circuitry 704. RF circuitry 706 may also include a transmit signal path which may include circuitry to up-convert baseband signals provided by the baseband circuitry 704 and provide RF output signals to FEM circuitry 708 for transmission.

In some embodiments, RF circuitry 706 may include a receive signal path and a transmit signal path. The receive signal path of RF circuitry 706 may include mixer circuitry 706a, amplifier circuitry 706b and filter circuitry 706c. The transmit signal path of RF circuitry 706 may include filter circuitry 706c and mixer circuitry 706a. RF circuitry 706 may also include synthesizer circuitry 706d for synthesizing a frequency for use by the mixer circuitry 706a of the receive signal path and the transmit signal path. In some embodiments, the mixer circuitry 706a of the receive signal path may be configured to down-convert RF signals received from FEM circuitry 708 based on the synthesized frequency provided by synthesizer circuitry 706d. Amplifier circuitry 706b may be configured to amplify the down-converted signals and the filter circuitry 706c may be a low-pass filter (LPF) or band-pass filter (BPF) configured to remove unwanted signals from the down-converted signals to generate output baseband signals. Output baseband signals may be provided to baseband circuitry 704 for further processing. In some embodiments, the output baseband signals may be zero-frequency baseband signals, although this may be optional. In some embodiments, mixer circuitry 706a of the receive signal path may comprise passive mixers, although the scope of the embodiments is not limited in this respect.

In some embodiments, mixer circuitry 706a of the transmit signal path may be configured to up-convert input baseband signals based on the synthesized frequency provided by synthesizer circuitry 706d to generate RF output signals for FEM circuitry 708. The baseband signals may be provided by the baseband circuitry 704 and may be filtered by filter circuitry 706c. Filter circuitry 706c may include a low-pass filter (LPF), although the scope of the embodiments is not limited in this respect.

In some embodiments, mixer circuitry 706a of the receive signal path and the mixer circuitry 706a of the transmit signal path may include two or more mixers and may be arranged for quadrature down conversion and/or up conversion respectively. In some embodiments, mixer circuitry 706a of the receive signal path and the mixer circuitry 706a of the transmit signal path may include two or more mixers and may be arranged for image rejection, for example Hartley image rejection. In some embodiments, mixer circuitry 706a of the receive signal path and the mixer circuitry 706a may be arranged for direct down conversion and/or direct up conversion, respectively. In some embodiments, mixer circuitry 706a of the receive signal path and mixer circuitry 706a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, RF circuitry 1006 may include analog-to-digital converter (ADC) and digital-to-analog converter (DAC) circuitry, and baseband circuitry 704 may include a digital baseband interface to communicate with RF circuitry 706. In some dual-mode embodiments, separate radio integrated circuit (IC) circuitry may be provided for processing signals for one or more spectra, although the scope of the embodiments is not limited in this respect.

In some embodiments, synthesizer circuitry 706d may be a fractional-N synthesizer or a fractional N/N+1 synthesizer, although the scope of the embodiments is not limited in this respect as other types of frequency synthesizers may be suitable. For example, synthesizer circuitry 706d may be a delta-sigma synthesizer, a frequency multiplier, or a synthesizer comprising a phase-locked loop with a frequency divider.

Synthesizer circuitry 706d may be configured to synthesize an output frequency for use by mixer circuitry 706a of RF circuitry 706 based on a frequency input and a divider control input. In some embodiments, synthesizer circuitry 706d may be a fractional N/N+1 synthesizer.

In some embodiments, frequency input may be provided by a voltage controlled oscillator (VCO), although this may be optional. Divider control input may be provided by either baseband circuitry 704 or applications processor 702 depending on the desired output frequency. In some embodiments, a divider control input (e.g., N) may be determined from a look-up table based on a channel indicated by applications processor 702.

Synthesizer circuitry 706d of RF circuitry 706 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1, for example based on a carry out, to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 706d may be configured to generate a carrier frequency as the output frequency, while in other embodiments, the output frequency may be a multiple of the carrier frequency, for example twice the carrier frequency, four times the carrier frequency, and so on, and used in conjunction with quadrature generator and divider circuitry to generate multiple signals at the carrier frequency with multiple different phases with respect to each other. In some embodiments, the output frequency may be a local oscillator (LO) frequency (fLO). In some embodiments, RF circuitry 706 may include an in-phase and quadrature (IQ) and/or polar converter.

FEM circuitry 708 may include a receive signal path which may include circuitry configured to operate on RF signals received from one or more antennas 710, amplify the received signals and provide the amplified versions of the received signals to the RF circuitry 706 for further processing. FEM circuitry 708 may also include a transmit signal path which may include circuitry configured to amplify signals for transmission provided by RF circuitry 706 for transmission by one or more of the one or more antennas 710.

In some embodiments, FEM circuitry 708 may include a transmit/receive (TX/RX) switch to switch between transmit mode and receive mode operation. FEM circuitry 708 may include a receive signal path and a transmit signal path. The receive signal path of FEM circuitry 708 may include a low-noise amplifier (LNA) to amplify received RF signals and to provide the amplified received RF signals as an output, for example to RF circuitry 706. The transmit signal path of FEM circuitry 708 may include a power amplifier (PA) to amplify input RF signals, for example provided by RF circuitry 706, and one or more filters to generate RF signals for subsequent transmission, for example by one or more of antennas 710. In some embodiments, device 700 may include additional elements such as, for example, memory and/or storage, display, camera, sensor, and/or input/output (I/O) interface.

It is believed that the subject matter pertaining to a scheduling request in extremely high frequency systems and many of its attendant utilities will be understood by the forgoing description, and it will be apparent that various changes may be made in the form, construction and/or arrangement of the components thereof without sacrificing all of its material advantages.

**Claims**

1. An apparatus of a user equipment, UE, comprising baseband processing circuitry to:

   generate a scheduling request to be transmitted to an evolved Node B, eNB, if the UE has uplink data for transmission, wherein the scheduling request is a UE specific scheduling request generated by the baseband processing circuitry in one or more resource blocks that occupy the same time resources as a physical random access channel, PRACH and different frequency resources than the PRACH;
   process an uplink grant received from the eNB; and
   process the uplink data to be transmitted to the eNB in response to the uplink grant.

2. The apparatus of a UE as claimed in claim 1, wherein the baseband processing circuity is configured to generate a sequence based scheduling request or a channel based scheduling request with modulated symbols.

3. The apparatus of a UE as claimed in any of claims 1-2, wherein the baseband processing circuitry is configured to multiplex the scheduling request with one or more other scheduling requests of one or more other users.

4. The apparatus of a UE as claimed in claim 3, wherein the scheduling request and the one or more other scheduling requests are multiplexed using frequency division multiplexing, FDM, or code division multiplexing, CDM,, or a combination thereof.

5. The apparatus of a UE as claimed in any of claim 3-4, wherein the scheduling request and the one or more other scheduling requests are carrier specific multiplexed or resource block specific multiplexed.

6. The apparatus of a UE as claimed any of claims 1-5, wherein the baseband processing circuitry is configured to process the scheduling request using a Zadoff-Chu sequence.

7. The apparatus of a UE as claimed in claim 6 wherein the baseband processing circuitry is configured to apply a cyclic shift value on modulated symbols defined as a function of a UE specific parameter configured by higher layers via radio resource control, RRC, signaling or indicated in a downlink control information, DCI, format for downlink assignment.

8. An apparatus of an enhanced NodeB, eNB, comprising baseband processing circuitry to:

   process a scheduling request received from a user equipment, UE, when the UE has uplink data for transmission, wherein the scheduling request is a UE specific scheduling request processed by the baseband processing circuitry in one or more resource blocks that occupy the same time resources as a physical random access channel, PRACH and different frequency resources than the PRACH, and wherein a complex-valued symbol is utilized for processing the scheduling request;
   generate an uplink grant to the UE to transmit uplink data; and
   process the uplink data received from the UE.

9. The apparatus of an eNB as claimed in claim 8, wherein the complex-valued symbol is scrambled by a pseudo-random sequence initialized as a function of cell ID and subframe index.

10. The apparatus of an eNB as claimed in any of claims 8-9, wherein the scheduling request is processed in a scheduling request channel along with a number of payload bits, a Buffer Status Report, BSR, a short BSR, or a reference signal, or a combination thereof.

11. The apparatus of an eNB as claimed in any of claims 8-10, wherein one symbol of the scheduling request channel contains data and a demodulation reference signal, DMRS, via frequency division multiplexing, FDM, way, wherein the symbol is repeated within one subframe.

12. The apparatus of an eNB as claimed in any of claims 8-11, wherein two symbols of the scheduling request are processed wherein one symbol comprises a demodulation reference signal, DMRS, and the other symbol comprises data.

13. The apparatus of an eNB as claimed in any of claims 8-12, wherein two symbols of the scheduling request are processed wherein one symbol comprises a demodulation reference signal, DMRS, and data is processed on two repeated symbols to reduce the overhead of the DMRS.

14. The apparatus of an eNB as claimed in any of claims 8-13, wherein a frequency domain index is configured via higher layer signaling and has a value from zero to a maximum value based on a total number of resource blocks for scheduling transmission and a number of resource blocks per scheduling request.

15. Machine-readable storage including machine-readable instructions, when executed (a) by an apparatus of a user equipment, UE, comprising baseband processing, perform the activities of the apparatus of claims 1-7; or (b) by an apparatus of an enhanced NodeB, eNB, comprising baseband processing circuitry, perform the activities of the apparatus of claims 8-14.

**Patentansprüche**

1. Vorrichtung eines Benutzergeräts, UE, umfassend eine Basisbandverarbeitungsschaltung zum:

Erzeugen einer Planungsanforderung, die an einen evolved Node B, enB, übertragen werden soll, wenn das UE Uplink-Daten zur Übertragung aufweist, wobei die Planungsanforderung eine UE-spezifische Planungsanforderung ist, die durch die Basisbandverarbeitungsschaltung in einem oder mehreren Ressourcenblöcken erzeugt wird, die die gleichen Zeitressourcen wie ein physikalischer Direktzugriffskanal, PRACH, und andere Frequenzressourcen als der PRACH belegen;
Verarbeiten einer Uplink-Gewährung, die von dem eNB empfangen wird; und
Verarbeiten der Uplink-Daten, die an den eNB als Reaktion auf die Uplink-Gewährung übertragen werden sollen.

2. Vorrichtung eines UE nach Anspruch 1, wobei die Basisbandverarbeitungsschaltung konfiguriert ist, um eine sequenzbasierte Planungsanforderung oder eine kanalbasierte Planungsanforderung mit modulierten Symbolen zu erzeugen.

3. Vorrichtung eines UE nach einem der Ansprüche 1-2, wobei die Basisbandverarbeitungsschaltung konfiguriert ist, um die Planungsanforderung mit einer oder mehreren anderen Planungsanforderungen eines oder mehrerer anderer Benutzer zu multiplexen.

4. Vorrichtung eines UE nach Anspruch 3, wobei die Planungsanforderung und die eine oder mehreren anderen Planungsanforderungen unter Verwenden von Frequenzmultiplexen, FDM, oder Codemultiplexen, CDM, oder einer Kombination davon gemultiplext werden.

5. Vorrichtung eines UE nach einem der Ansprüche 3-4, wobei die Planungsanforderung und die eine oder mehreren anderen Planungsanforderungen trägerspezifisch gemultiplext oder ressourcenblockspezifisch gemultiplext werden.

6. Vorrichtung eines UE nach einem der Ansprüche 1-5, wobei die Basisbandverarbeitungsschaltung konfiguriert ist, um die Planungsanforderung unter Verwenden einer Zadoff-Chu-Sequenz zu verarbeiten.

7. Vorrichtung eines UE nach Anspruch 6, wobei die Basisbandverarbeitungsschaltung konfiguriert ist, um einen zyklischen Verschiebungswert auf modulierte Symbole anzuwenden, definiert als eine Funktion eines UE-spezifischen Parameters, konfiguriert durch höhere Schichten über Funkressourcensteuerungs-, RRC-, Signalisierung oder angegeben in einem Downlink-Steuerinformations-, DCI-, Format zur Downlink-Zuweisung.

8. Vorrichtung eines erweiterten NodeB, eNB, umfassend eine Basisbandverarbeitungsschaltung zum:

Verarbeiten einer Planungsanforderung, die von einem Benutzergerät, UE, empfangen wird, wenn das UE Uplink-Daten zur Übertragung aufweist, wobei die Planungsanforderung eine UE-spezifische Planungsanforderung ist, die durch die Basisbandverarbeitungsschaltung in einem oder mehreren Ressourcenblöcken verarbeitet wird, die die gleichen Zeitressourcen wie ein physikalischer Direktzugriffskanal, PRACH, und andere Frequenzressourcen als der PRACH belegen, und wobei ein komplexwertiges Symbol zum Verarbeiten der Planungsanforderung verwendet wird;
Erzeugen einer Uplink-Gewährung zu dem UE zum Übertragen von Uplink-Daten; und Verarbeiten der Uplink-Daten, die von dem UE empfangen werden.

9. Vorrichtung eines eNB nach Anspruch 8, wobei das komplexwertige Symbol durch eine Pseudozufallssequenz verwürfelt wird, die als eine Funktion von Zellen-ID und Unterrahmenindex initialisiert wird.

10. Vorrichtung eines eNB nach einem der Ansprüche 8-9, wobei die Planungsanforderung in einem Planungsanforderungskanal zusammmen mit einer Anzahl von Nutzlastbits, einem Pufferstatusbericht, BSR, einem kurzen BSR oder einem Referenzsignal oder einer Kombination davon verarbeitet wird.

11. Vorrichtung eines eNB nach einem der Ansprüche 8-10, wobei ein Symbol des Planungsanforderungskanals Daten und ein Demodulationsreferenzsignal, DMRS, über Frequenzmultiplexen, FDM, beinhaltet, wobei das Symbol innerhalb eines Unterrahmens wiederholt wird.

12. Vorrichtung eines enB nach einem der Ansprüche 8-11, wobei zwei Symbole der Planungsanforderung verarbeitet werden, wobei ein Symbol ein Demodulationsreferenzsignal, DMRS, umfasst und das andere Symbol Daten umfasst.

13. Vorrichtung eines eNB nach einem der Ansprüche 8-12, wobei zwei Symbole der Planungsanforderung verarbeitet werden, wobei ein Symbol ein Demodulationsreferenzsignal, DMRS, umfasst und Daten auf zwei wiederholten Symbolen verarbeitet werden, um den Overhead des DMRS zu reduzieren.

14. Vorrichtung eines eNB nach einem der Ansprüche 8-13, wobei ein Frequenzbereichsindex über Signalisierung höherer Schichten konfiguriert ist und einen Wert von null bis zu einem Maximalwert aufweist, basierend auf einer Gesamtanzahl von Ressourcenblöcken zur Planungsübertragung und einer Anzahl von Ressourcenblöcken pro Planungsanforderung.

15. Maschinenlesbarer Speicher, umfassend maschinenlesbare Anweisungen, die, wenn sie ausgeführt werden (a) durch eine Vorrichtung eines Benutzergeräts, UE, umfassend Basisbandverarbeitung, die Aktivitäten der Vorrichtung nach den Ansprüchen 1-7 durchführen; oder (b) durch eine Vorrichtung eines erweiterten NodeB, eNB, umfassend eine Basisbandverarbeitungsschaltung, die Aktivitäten der Vorrichtung nach den Ansprüchen 8-14 durchführen.


**Revendications**

1. Un appareil d'un équipement utilisateur, UE, comprenant une circuiterie de traitement de bande de base pour :

    générer une requête de planification à transmettre à un noeud B évolué, eNB, si l'UE a des données de liaison montante à transmettre, dans lequel la requête de planification est une requête de planification spécifique à l'UE générée par la circuiterie de traitement de bande de base dans un ou plusieurs blocs de ressources qui occupent les mêmes ressources temporelles qu'un canal physique d'accès aléatoire, PRACH, et des ressources fréquentielles différentes de celles du PRACH ;
    traiter une autorisation de liaison montante reçue en provenance de l'eNB ; et
    traiter les données de liaison montante à transmettre à l'eNB en réponse à l'autorisation de liaison montante.

2. L'appareil d'un UE selon la revendication 1, dans lequel la circuiterie de traitement de bande de base est configurée pour générer une requête de planification basée sur une séquence ou une requête de planification basée sur un canal avec des symboles modulés.

3. L'appareil d'un UE selon une des revendications 1 à 2, dans lequel la circuiterie de traitement de bande de base est configurée pour multiplexer la requête de planification et une ou plusieurs autres requêtes de planification d'un ou plusieurs autres utilisateurs.

4. L'appareil d'un UE selon la revendication 3, dans lequel la requête de planification et les une ou plusieurs autres requêtes de planification sont multiplexées en utilisant un multiplexage par répartition en fréquence, FDM, ou un multiplexage par répartition en code, CDM, ou une combinaison de ceux-ci.

5. L'appareil d'un UE selon une des revendications 3 à 4, dans lequel la requête de planification et les une ou plusieurs autres requêtes de planification sont multiplexées de façon spécifique à la porteuse ou multiplexées de façon spécifique au bloc de ressource.

6. L'appareil d'un UE selon une des revendications 1 à 5, dans lequel la circuiterie de traitement de bande de base est configurée pour traiter la requête de planification en utilisant une séquence de Zadoff-Chu.

7. L'appareil d'un UE selon la revendication 6, dans lequel la circuiterie de traitement de bande de base est configurée pour appliquer une valeur de décalage cyclique sur des symboles modulés définis en fonction d'un paramètre spécifique à l'UE configuré par des couches supérieures via une signalisation de contrôle de ressource radio, RRC, ou indiqué dans un format d'information de contrôle de liaison descendante, DCI, pour une attribution de liaison descendante.

8. Un appareil d'un noeud B évolué, eNB, comprenant une circuiterie de traitement de bande de base pour :

traiter une requête de planification reçue en provenance d'un équipement utilisateur, UE, quand l'UE a des données de liaison montante à transmettre, dans lequel la requête de planification est une requête de planification spécifique à l'UE traitée par la circuiterie de traitement de bande de base dans un ou plusieurs blocs de ressources qui occupent les mêmes ressources temporelles qu'un canal physique d'accès aléatoire, PRACH, et des ressources fréquentielles différentes de celles du PRACH, et dans lequel un symbole à valeur complexe est utilisé pour le traitement de la requête de planification ;
générer une autorisation de liaison montante pour l'UE pour transmettre des données de liaison montante ; et
traiter les données de liaison montante reçues en provenance de l'UE.

9. L'appareil d'un eNB selon la revendication 8, dans lequel le symbole à valeur complexe est brouillé par une séquence pseudo-aléatoire initialisée en fonction d'un ID de cellule et d'un index de sous-trame.

10. L'appareil d'un eNB selon une des revendications 8 à 9, dans lequel la requête de planification est traitée dans un canal de requête de planification conjointement avec un nombre de bits de charge utile, un rapport d'état de mémoire tampon, BSR, un BSR court, ou un signal de référence, ou une combinaison de ceux-ci.

11. L'appareil d'un eNB selon une des revendications 8 à 10, dans lequel un symbole du canal de requête de planification contient des données et un signal de référence de démodulation, DMRS, via un mode de multiplexage par répartition en fréquence, FDM, dans lequel le symbole est répété à l'intérieur d'une sous-trame.

12. L'appareil d'un eNB selon une des revendications 8 à 11, dans lequel deux symboles de la requête de planification sont traités, un symbole comprenant un signal de référence de démodulation, DMRS, et l'autre symbole comprenant des données.

13. L'appareil d'un eNB selon une des revendications 8 à 12, dans lequel deux symboles de la requête de planification sont traités, un symbole comprenant un signal de référence de démodulation, DMRS, et des données étant traitées sur deux symboles répétés pour réduire la surcharge du DMRS.

14. L'appareil d'un eNB selon une des revendications 8 à 13, dans lequel un index de domaine fréquentiel est configuré via une signalisation de couche supérieure et possède une valeur allant de zéro à une valeur maximale sur la base d'un nombre total de blocs de ressource pour la planification d'une transmission et d'un nombre de blocs de ressource par requête de planification.

15. Dispositif de stockage lisible par machine comportant des instructions lisibles par machine qui, quand elles sont exécutées (a) par un appareil d'un équipement utilisateur, UE, comprenant un traitement de bande de base, réalisent les activités de l'appareil selon les revendications 1 à 7 ; ou (b) par un appareil d'un noeud B évolué, eNB, comprenant une circuiterie de traitement de bande de base, réalisent les activités de l'appareil selon les revendications 8 à 14.

100

110

**UE**

112

**eNB**

1: xPRACH

2: EPDCCH
Random Access Responce = PUSCH UCI grant

3: PUSCH with UCI as payload
e.g. Buffer status report

4: UL grant

5: UL data

FIG. 1

Frequency

200

212

xSR region #1

xPRACH

210

Resource for SR transmission

214

xSR region #2

Time

1 OFDM symbol

1 subframe

FIG. 2

Example 1

Example 2

310

312

300

1 symbol

☐ xSR of user 1

▨ xSR of user 2

314

Example 1

Example 2

One PRB

N PRBs for SR

7 symbols

7 symbols

FIG. 3

☐ xSR of user 1

▨ xSR of user 2

FIG. 4

FIG. 5

EP 3 398 391 B1

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015178566 A1

- US 2010040005 A1